# EUROPÄISCHE PATENTSCHRIFT

(11) **EP 4 005 441 B1**
(45) Veröffentlichungstag und Bekanntmachung des Hinweises auf die Patenterteilung: **20.12.2023**
(21) Anmeldenummer: 21203322.9
(22) Anmeldetag: 19.10.2021
(51) Int. Cl.: A47J 31/46, A47J 31/52, A47J 31/60

(54) **GETRÄNKEAUTOMAT UND VERFAHREN ZUR ANSTEUERUNG EINES VENTILS EINES BYPASSES EINES WASSERFILTERS IN EINEM DERARTIGEN GETRÄNKEAUTOMATEN**
BEVERAGE DISPENSER AND METHOD FOR CONTROLLING A VALVE OF A BYPASS OF A WATER FILTER IN SUCH A BEVERAGE DISPENSER
DISPOSITIF AUTOMATIQUE À BOISSONS ET PROCÉDÉ DE COMMANDE D'UNE SOUPAPE D'UNE DÉRIVATION D'UN FILTRE À EAU DANS UN TEL DISPOSITIF AUTOMATIQUE À BOISSONS

(30) Priorität: 19.11.2020 DE 102020130525
(43) Veröffentlichungstag der Anmeldung: 01.06.2022
(73) Patentinhaber: Miele & Cie. KG, 33332 Gütersloh (DE)
(72) Erfinder: Belda, Dominik, 59494 Soest (DE)

(56) Entgegenhaltungen:
- US-A1- 2007 108 136
- US-A1- 2013 139 702

## Beschreibung

Die Erfindung betrifft einen Getränkeautomaten sowie ein Verfahren zur Ansteuerung eines Ventils eines Bypasses eines Wasserfilters in einem derartigen Getränkeautomaten.

In Getränkeautomaten kommen verstärkt Wasserfilter zum Einsatz, die zumeist in den Wassertank des Getränkeautomaten eingesetzt werden. Das für die Zubereitung von Getränken zum Einsatz kommende Frischwasser wird mittels dieser Wasserfilter gefiltert, was sich auf die Qualität und den Geschmack der zubereiteten Getränke positiv auswirkt. Dabei wird in den meisten Getränkeautomaten das gesamte Frischwasser gefiltert, unabhängig davon, ob mit diesem Frischwasser Getränke hergestellt werden oder beispielsweise Reinigungsprogramme beziehungsweise Entkalkungsprogramme des Getränkeautomaten durchgeführt werden sollen. Dies hat zur Folge, dass die gegenwärtig verwendeten Wasserfilter einem extrem hohen Durchsatz ausgesetzt sind und folglich infolge ihrer begrenzten Haltbarkeit sowie in Abhängigkeit von dem lokal unterschiedlichen Zustand des Frischwassers, häufiger ausgetauscht werden müssen, als dies für den Anwender des Getränkeautomaten wünschenswert ist.

Aus der DE 10 2008 010 914 A1 ist bereits ganz allgemein ein Getränkeautomat bekannt, der als Wasservorrat einen Wasserbehälter zur Aufnahme von Frischwasser aufweist, das der Zubereitung von Getränken sowie der Durchführung von Reinigungsprogrammen des Getränkeautomaten dient. In den Wasserbehälter ist ein Wasserfilter eingesetzt, um das im Wassertank befindliche Wasser aufzubereiten, bevor es dem Strömungsleitungssystem des Getränkeautomaten zugeführt wird. Der Wasserfilter besteht dabei aus einer Filterkartusche mit einem Filtergranulat, welches in an sich bekannter Weise dazu verwendet wird, das Frischwasser des Wassertanks zu demineralisieren beziehungsweise feine Partikel aus dem Frischwasser herauszufiltern. Um das Frischwasser durch den Wasserfilter hindurch zu saugen, verfügt der in der Druckschrift beschriebene Getränkeautomat über eine Saugpumpe. In dem Wassertank ist zur Aufnahme des Wasserfilters ferner ein Tankstutzen vorhanden, auf den der Wasserfilter unter Bildung einer Abdichtung aufgesetzt wird.

Darüber hinaus geht aus der WO 2008/017492 A1 ein Wassertank eines Getränkeautomaten hervor, in den ein Wasserfilter eingesetzt ist. Die in dieser Druckschrift beschriebene Lösung dient dazu, nur zugelassene Wasserfilter in den Wassertank einsetzen zu können, wozu sowohl der Wasserfilter, als auch der zur Aufnahme des Wasserfilters ausgeführte Anschlussflansch im Wassertank jeweils korrespondierende Geometrien nach dem Prinzip Schlüssel-Schlüsselloch aufweisen. In der Druckschrift wird ferner ein Bypass beschrieben, über den ein Teil des in dem Wassertank vorhandenen Frischwassers am Wasserfilter vorbei unmittelbar in das Strömungsleitungssystem des Getränkeautomaten überführt werden kann. Dieser Bypass dient dazu, einen Verschnitt, das heißt, eine Mischung aus ungefiltertem und gefiltertem Frischwasser bereitzustellen, was zu einer Verlängerung der Lebensdauer des Wasserfilters führt. Der Bypass kann darüber hinaus auch bei nicht mehr funktionsfähigem Wasserfilter zum Einsatz kommen. Damit beschreibt die WO 2008/017492 A1 bereits eine Möglichkeit, das zuvor beschriebene Problem in verbesserter Weise zu lösen. Als Bypass dienen gemäß dem Offenbarungsgehalt der Druckschrift Öffnungen in dem Anschlussflansch, die beim Aufsetzen des Wasserfilters winkelabhängig verschlossen werden. Auf diese Weise wird eine Verschnittvorrichtung gebildet, durch die die zuvor erwähnte Mischung des Frischwassers erreicht werden kann. Da die Funktionsweise der in dieser Druckschrift beschriebenen Verschnittvorrichtung sich nach der Position des Wasserfilters im Anschlussflansch richtet, ist es erforderlich, dass der Anwender des Getränkeautomaten den Wasserfilter so in den Anschlussflansch einsetzt, dass entweder sämtliche Öffnungen des Bypasses verschlossen oder nur einige Öffnungen geöffnet sind. Mit anderen Worten ist hierbei eine manuelle Verstellmöglichkeit gegeben, die naturgemäß Fehlermöglichkeiten eröffnet.

US2013/139702 A1 offenbart einen Getränkeautomat mit einem Wasserfilter zur Filterung des in das Strömungsleitungssystem des Getränkeautomaten abzugebenden Frischwassers, wobei der Wasserfilter, in Flussrichtung betrachtet, vor dem Frischwassereinlauf des Strömungsleitungssystems angeordnet ist, wobei der Wasserfilter einen durch ein Ventil verschlossenen Bypass aufweist, über den bei geöffnetem Ventil ungefiltertes Frischwasser in das Strömungsleitungssystem des Getränkeautomaten zuführbar ist.

Bei den bekannten Getränkeautomaten mit einem Wasserfilter ist es bislang nicht möglich, möglichst weitgehend automatisiert einen Verschnitt aus gefiltertem und ungefiltertem Frischwasser bereitzustellen. Ebenso ist es bislang nicht möglich, ausschließlich ungefiltertes Frischwasser für bestimmte Einsatzzwecke am Wasserfilter vorbei in das Strömungsleitungssystem des Getränkeautomaten einzubringen.

Der Erfindung liegt die Aufgabe zugrunde, einen Getränkeautomaten mit einem Wasserfilter für das zum Einsatz kommende Frischwasser bereitzustellen, bei dem eine automatisierte Filterung des Frischwassers sowie die Herstellung einer Verschnittmenge aus gefiltertem und ungefiltertem Frischwasser und die Bereitstellung von ausschließlich ungefiltertem Frischwasser möglich ist. Darüber hinaus ist ein Verfahren anzugeben, wie das jeweils erforderliche Frischwasser zur Durchführung von Programmen des Getränkeautomaten bereitgestellt werden kann.

Diese Aufgabe wird durch einen Getränkeautomaten mit den Merkmalen des Patentanspruches 1 und durch ein Verfahren nach dem Patentanspruch 8 gelöst. Weitere Ausgestaltungen der Erfindung sind Gegenstand der sich jeweils anschließenden Unteransprüche.

Das Frischwasser eines erfindungsgemäßen Getränkeautomaten kann dabei aus verschiedenen Wasserquellen bezogen werden. So gibt es beispielsweise Getränkeautomaten, die mit einem Wasseranschluss verbunden und auf diese Weise fest installiert sind. Andere Ausführungsvarianten weisen einen Wassertank auf, der in der Regel aus dem Getränkeautomaten entnommen werden kann, um ihn zu befüllen oder zu reinigen. Der Getränkeautomat weist ein verhältnismäßig komplexes Strömungsleitungssystem mit zahlreichen Aggregaten und Fluidleitungen auf. Der Wasserfilter ist dabei vor dem Eintritt des Frischwassers in das Strömungsleitungssystem angeordnet, um die Filterung des Frischwassers zu ermöglichen. Diese Filterung ist bei der Zubereitung von Getränken erwünscht beziehungsweise erforderlich, um die Eigenschaften des Frischwassers und dessen Geschmack zu verbessern, was sich letztlich auch positiv auf die herzustellenden Getränke auswirkt.

Die erfindungsgemäße Besonderheit besteht vorliegend darin, dass der Wasserfilter einen Bypass aufweist, um ungefiltertes Frischwasser an dem Wasserfilter vorbei zu leiten, welches beispielsweise für Reinigungszwecke oder für die Durchführung von Spülprogrammen, Entkalkungsprogrammen beziehungsweise von Entkeimungsprogrammen innerhalb des Strömungsleitungssystems des Getränkeautomaten genutzt wird. Derartige Bypässe sind zwar dem Grunde nach bekannt. Die erfindungsgemäße Ausführung besteht jedoch darin, dass der zum Einsatz kommende Bypass durch ein Ventil verschlossen ist. Somit wird grundsätzlich gewährleistet, dass bei geschlossenem Ventil ausschließlich gefiltertes Frischwasser in das Strömungsleitungssystem des Getränkeautomaten gelangt. Erst, wenn das Ventil geöffnet wird, kann auch oder ausschließlich ungefiltertes Frischwasser in das Strömungsleitungssystem überführt werden. Die Lösung, den Bypass mit einem Ventil zu verschließen, ermöglicht erstmals eine automatisierte Steuerung des Zuflusses von gefiltertem und/oder ungefiltertem Frischwasser, was in Abhängigkeit des vom Getränkeautomaten durchzuführenden Programmes erfolgt. Soll also beispielsweise ein Getränk hergestellt werden, so bleibt das Ventil des Bypasses geschlossen und das Frischwasser wird ausschließlich über den Wasserfilter in das Strömungsleitungssystem des Getränkeautomaten eingeleitet. Ist jedoch zum Beispiel ein Entkalkungsprogramm durchzuführen, wird das Ventil des Bypasses geöffnet, sodass überwiegend oder ausschließlich Frischwasser in ungefiltertem Zustand in das Strömungsleitungssystem des Getränkeautomaten überführt wird. Dadurch kann neben der bereits erwähnten Automatisierungsmöglichkeit auch eine wesentliche Verlängerung der Lebensdauer des Wasserfilters erreicht werden, was sich wiederum positiv auf die Anwenderfreundlichkeit und auch auf die Unterhaltskosten des erfindungsgemäßen Getränkeautomaten auswirkt.

Gemäß einer ersten Ausgestaltung der Erfindung ist einen Getränkeautomat offenbart, der mit einem Wasserfilter zur Filterung des in das Strömungsleitungssystem des Getränkeautomaten abzugebenden Frischwassers ausgestattet ist, wobei der Wasserfilter, in Flussrichtung betrachtet, vor dem Frischwassereinlauf des Strömungsleitungssystems angeordnet ist, wobei der Wasserfilter einen durch ein Ventil verschlossenen Bypass aufweist, über den bei geöffnetem Ventil ungefiltertes Frischwasser in das Strömungsleitungssystem des Getränkeautomaten zuführbar ist,dadurch gekennzeichnet,dass das Ventil dazu ausgebildet ist, das Öffnen und Schließen des Ventils mittels einer zur Erzeugung und Regulierung des Saugdruckes ausgeführten oder angesteuerten Pumpe zu bewirken, wobei der Ansaugdruck der Pumpe mittels einer hierfür ausgelegten Software einer elektronischen Steuerungsvorrichtung in Abhängigkeit eines durchzuführenden Programmes des Getränkeautomaten regelbar ist, sodass ab einem mit einem vordefinierten Sollwert identischen Istwert des Ansaugdruckes das den Bypass verschließende Ventil des Wasserfilters geöffnet wird, um ungefiltertes Frischwasser in das Strömungsleitungssystem des Getränkeautomaten einzubringen.

Hierbei eröffnet sich ein weiterer, sehr wesentlicher Vorteil der Erfindung, der darin besteht, dass Getränkeautomaten heutiger Bauart bereits mindestens eine Pumpe zur Förderung der Flüssigkeiten innerhalb des Strömungsleitungssystems aufweisen. Eine derartige Pumpe kann für den genannten Zweck verwendet werden. Es sind bis auf den neuartig gestalteten Wasserfilter folglich keine zusätzlichen Aggregate oder wesentliche Umbauten an dem Getränkeautomaten erforderlich, um die Erfindung zum Einsatz zu bringen. Die Pumpe kommt dabei nicht nur zum Einsatz, um den Fluss des Frischwassers innerhalb des Strömungsleitungssystems zu gewährleisten. Sie kommt gemäß einer vorteilhaften Ausführungsvariante der Erfindung zum Einsatz, um über eine Druckregulierung das Ventil des Bypasses anzusteuern. So ist es zum Beispiel möglich, durch eine Erhöhung des Pumpendrucks das Ventil zu öffnen, während das Ventil wieder schließt, wenn der Pumpendruck abgesenkt wird. Diese Möglichkeit der Ansteuerung des Ventils des Bypasses ist extrem einfach und daher in vorteilhafter Weise umsetzbar. Eine Variante dieses Vorschlages ist auch darin zu sehen, dass die Pumpe einen kurzzeitigen Unterdruckstoß erzeugt und dadurch das Ventil des Bypasses geöffnet wird. Durch den sich einstellenden Fluss bleibt das Ventil in diesem Fall geöffnet, während die Pumpenleistung auf einem niedrigen Niveau gehalten werden kann. Dieser Lösungsvorschlag spart zusätzlich Energie und schont zudem die zum Einsatz kommende Pumpe. Zum Verschließen des Ventils wird hierbei zum Beispiel die Förderrichtung der Pumpe kurzzeitig umgekehrt. Durch den sich ausbildenden Druckstoß wird dadurch das Ventil geschlossen.

Entsprechend einer Weiterbildung der Erfindung kann der Wasserfilter unmittelbar in dem Wassertank des Getränkeautomaten angeordnet werden oder dem Wassertank nachgeordnet sein. Um die Filterung des Frischwassers vor dem Eintritt in das Strömungsleitungssystem des Getränkeautomaten zu gewährleisten, sollte der Wasserfilter dabei im zuletzt genannten Fall unmittelbar an dem Frischwassereinlauf des Strömungsleitungssystems vorgesehen sein. Befindet sich der Wasserfilter außerhalb des Wassertanks, so hat dies den Vorteil, dass ein größeres Volumen für das Frischwasser im Wassertank zur Verfügung steht und eine Befüllung des Wassertanks dadurch seltener erfolgen muss, als bei der Variante, die die Integration des Wasserfilters in den Wassertank vorsieht. Ein anderer Vorteil, der sich aus der zuletzt genannten Variante ergibt, besteht darin, dass der Wassertank unter Umständen auch kleiner ausgeführt werden kann, als bei einer Lösung mit integriertem Wasserfilter. Dadurch wird es möglich, den Getränkeautomaten insgesamt kompakter auszuführen.

Das Ventil des Bypasses kann konstruktiv unterschiedlich ausgeführt sein. Dem Fachmann stehen hierbei eine Vielzahl unterschiedlicher Ventilbauarten zur Verfügung. Letztlich ist nur von Bedeutung, dass sich das Ventil elektrisch, magnetisch oder durch Druckänderungen ansteuern lässt. Ein erstes Beispiel für die Möglichkeit der Ausführung des Ventils des Bypasses besteht darin, dass das Ventil ein Membranventil mit einer flexiblen Membran ist. Derartige Membranventile reagieren flink auf Druckänderungen, sodass die erfindungsgemäße Lösung mit einem solchen Ventil sehr einfach umsetzbar ist.

Alternativ zu dem zuvor erwähnten Membranventil kann das Ventil durch eine den Bypass mittels der Kraft einer Feder verschließenden Kugel gebildet sein. Bei einer derartigen Ausführung des Ventils sind höhere Kräfte, das heißt, höhere Druckänderungen erforderlich, um die Kugel gegen die Kraft der Feder zu bewegen, als dies bei Membranventilen der Fall ist. Allerdings zeichnen sich derartige Ventile durch eine längere Lebensdauer und einen äußerst geringen Verschleiß aus.

Ein ganz besonders vorteilhafter Vorschlag geht darüber hinaus dahin, dass das Ventil ein Mehrwegeventil, insbesondere ein Zweiwegeventil ist. Mit dieser Lösung wird es möglich, beliebige Ventilstellungen vorzusehen. So kann beispielsweise mit einem Zweiwegeventil ausschließlich Frischwasser in gefiltertem oder in ungefiltertem Zustand in das Strömungsleitungssystem überführt werden. Darüber hinaus ist eine Stellung des Zweiwegeventils denkbar, bei dem eine Mischvariante aus gefiltertem und ungefiltertem Frischwasser Verwendung findet. In jedem Fall ist es mit einem Zweiwegeventil möglich, eine klare Trennung zwischen gefiltertem und ungefiltertem Frischwasser zu erreichen.

Gemäß einer weiterbildenden Maßnahme dieses Vorschlages weist der Getränkeautomat eine elektronische Steuerungsvorrichtung auf, deren Software dazu ausgelegt und geeignet ist, verschiedene Programme des Getränkeautomaten durchzuführen und in Abhängigkeit des jeweiligen Programmes eine Umschaltung des Zweiwegeventils in eine hierfür erforderliche Stellung zu veranlassen. Dabei kann auch ein Zweiwegeventil über Druckunterschiede oder magnetisch beziehungsweise elektrisch angesteuert werden.

Hinsichtlich der Gestaltung des Bypasses hat es sich als besonders vorteilhaft erwiesen, den Bypass als einen Kanal beziehungsweise kanalartig auszubilden. Das den Kanal passierende Volumen kann bei dieser Ausführung sehr genau bemessen werden, was bei den eingangs beschriebenen und bereits bekannten Öffnungen am Boden des Wasserfilters nicht möglich ist.

Das erfindungsgemäße Verfahren zur Ansteuerung eines Ventils eines Bypasses eines Wasserfilters in einem Getränkeautomaten ist dadurch gekennzeichnet, dass der Ansaugdruck einer in dem Strömungsleitungssystem des Getränkeautomaten vorhandenen Pumpe mittels einer hierfür ausgelegten Software einer elektronischen Steuerungsvorrichtung in Abhängigkeit eines durchzuführenden Programmes des Getränkeautomaten regelbar ist, sodass ab einem mit einem vordefinierten Sollwert identischen Istwert des Ansaugdruckes das den Bypass verschließende Ventil des Wasserfilters geöffnet wird, um ungefiltertes Frischwasser in das Strömungsleitungssystem des Getränkeautomaten einzubringen. Im Umkehrschluss ermöglicht das erfindungsgemäße Verfahren natürlich auch, bei einem definierten Druck das Ventil des Bypasses zu verschließen. Dabei lässt sich das Öffnen des Ventils mit einem Unterdruck und das Verschließen des Ventils mit einem Überdruck oder einem Wegfall des Unterdrucks besonders einfach umsetzen.

Das erfindungsgemäße Verfahren lässt sich gemäß einer Ausgestaltung besonders einfach umsetzen, wenn der Ansaugdruck der Pumpe über die Regelung der Drehzahl der Pumpe variiert wird. Hierfür sind keine wesentlichen Verfahrensänderungen innerhalb der Steuerung des Getränkeautomaten erforderlich, sodass diese Lösung verhältnismäßig einfach zu realisieren ist.

Wie bereits ausgeführt wurde, ist es Sinn und Zweck der Erfindung, das gefilterte Frischwasser zur Zubereitung von Getränken und das ungefilterte Frischwasser zur Durchführung von Spülungen, Reinigungsprogrammen und/oder Entkalkungsbeziehungsweise Entkeimungsprogrammen zu verwenden. Gefiltertes Frischwasser für die Getränkezubereitung zu verwenden, verbessert den Geschmack. Ungefiltertes Frischwasser für die Durchführung der genannten Programme des Getränkeautomaten einzusetzen schont den Wasserfilter und verlängert damit seine Lebensdauer erheblich. Dadurch werden Kosten eingespart, der Wartungsaufwand des Getränkeautomaten wird reduziert und nicht zuletzt ergeben sich hieraus auch umweltschonende Aspekte, da weniger Müll in Form von Filterabfällen anfällt.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Getränkeautomaten in einer Ausführung als freistehendes Einzelgerät am Beispiel eines Kaffeevollautomaten,
- Figur 2:: einen Wassertank mit einem integrierten Wasserfilter,
- Figur 3:: den Wassertank aus Figur 2 mit integriertem Wasserfilter und einer ersten Ausführungsvariante eines Ventils im geschlossenen Zustand,
- Figur 4:: den Wassertank aus Figur 3 mit integriertem Wasserfilter und einer ersten Ausführungsvariante eines Ventils im geöffneten Zustand,
- Figur 5:: einen Wasserfilter in einer weiteren Ausführungsvariante des Ventils im geschlossenen Zustand
- und Figur 6:: den Wasserfilter aus Figur 5 mit geöffnetem Ventil des Bypasses.

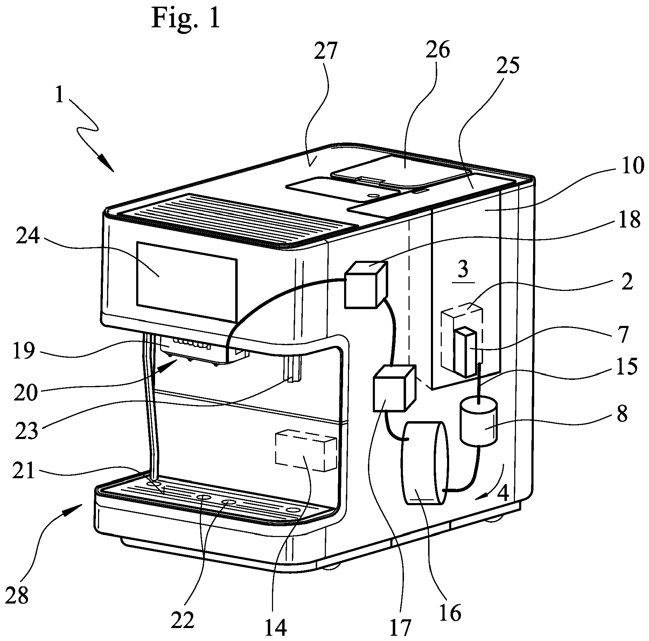

Aus der Figur 1 geht ein Getränkeautomat 1 in einer Ausführung als freistehendes Einzelgerät am Beispiel eines Kaffeevollautomaten hervor, mit dem unterschiedliche Kaffeegetränke hergestellt werden können, der jedoch auch die Möglichkeit bietet, Heißwasser für die Zubereitung eines Teegetränkes zu entnehmen. Der dargestellte Getränkeautomat 1 verfügt über einen Wassertank 10, in dem ein Wasserfilter 2 angeordnet ist, sodass durch den Wasserfilter 2 das in dem Wassertank 10 vorhandene Frischwasser 3 gefiltert werden kann, bevor es in das Strömungsleitungssystem des Getränkeautomaten 1 überführt wird. Die Besonderheit dieses Wasserfilters 2 besteht darin, dass hier ein Bypass 7 vorhanden ist, der in einer nachfolgend näher zu beschreibenden Weise durch ein Ventil 6 verschlossen ist. In Flussrichtung 4 des Frischwassers 3 betrachtet, weist das Strömungsleitungssystem des Getränkeautomaten 1 unter anderem eine Pumpe 8 auf, die in dem dargestellten Beispiel unmittelbar an die Saugleitung 15 des Wassertanks 10 angeschlossen ist. Die Saugleitung 15 entspricht hierbei auch dem Frischwassereinlauf 5 des Strömungsleitungssystems. Die Funktion der Pumpe 8 besteht überwiegend in der Förderung des im Strömungsleitungssystem befindlichen Frischwassers 3 vom Wassertank 10 zu einer Ausgabeeinheit 19, über die beispielsweise Heißwasser, Wasserdampf oder die in dem Getränkeautomaten 1 hergestellten Getränke abgegeben werden. In an sich bekannter Weise ist in dem in der Figur 1 gezeigten Getränkeautomaten 1 eine Heizeinrichtung 16 vorhanden, die dazu ausgelegt ist, eine für die Herstellung der Getränke erforderliche Brühtemperatur des Frischwassers 3 zu erzeugen. Das auf diese Weise erhitzte Frischwasser 3 wird anschließend über eine Dampfdüse 23 unmittelbar in ein abgestelltes Trinkgefäß abgegeben oder in eine Brüheinheit 17 überführt, wo es mit dem für die Herstellung eines Kaffeegetränkes erforderlichen Kaffeepulver zusammengeführt wird. Für die Steuerung der Flussrichtung des Heißwassers ist ein Steuerungsventil 18 vorhanden, das ebenfalls einen wesentlichen Bestandteil des Strömungsleitungssystems bildet. Durch die Zuführung des Heißwassers zu der Brüheinheit 17 wird ein Kaffeegetränk erzeugt, das anschließend über die Auslaufdüsen 20 der Ausgabeeinheit 19 in ein bereitgestelltes, jedoch in der Figur 1 aus Vereinfachungsgründen nicht gezeigtes Trinkgefäß abgegeben werden kann. Zum Abstellen des Trinkgefäßes dient eine Abstellfläche 21, in der sich mehrere Ablauföffnungen 22 befinden, um übergelaufene oder verspritzte Flüssigkeiten in eine unterhalb der Abstellfläche 21 vorhandener Auffangschale abzuführen und in der Auffangschale zu sammeln. An der Frontseite 28 des Getränkeautomaten 1 ist ferner eine Eingabe- und Anzeigeeinrichtung 24 vorhanden, über die eine Auswahl des herzustellenden Getränks oder eine Programmierung des Getränkeautomaten 1 erfolgen kann. Darüber hinaus dient die Eingabe- und Anzeigeeinrichtung 24 dazu, Informationen für den Anwender des Getränkeautomaten 1 anzuzeigen. Da in einem Getränkeautomaten 1 zahlreiche Steuerungs- und Regelvorgänge ablaufen, weist dieser ferner eine in der Figur 1 lediglich durch gestrichelte Linien angedeutete elektronische Steuerungsvorrichtung 14 auf. Die elektronische Steuerungsvorrichtung 14 bildet dabei eine Art Schaltzentrale, die über eine entsprechende Software verfügt. Bei dem in Figur 1 gezeigten Getränkeautomaten 1 ist ferner an der Oberseite 27 ein Bohnenbehälterdeckel 26 erkennbar, der einen Bohnenbehälter zur Aufnahme frischer Kaffeebohnen aromadicht verschließt. Darüber hinaus befindet sich an der Oberseite 27 ein Wassertankdeckel 25, der den Wassertank 10 abdichtet. Bei dem Getränkeautomaten 1 in Figur 1 ist der Wassertank 10 entnehmbar ausgeführt, sodass er losgelöst vom Getränkeautomaten 1 gereinigt beziehungsweise befüllt werden kann.

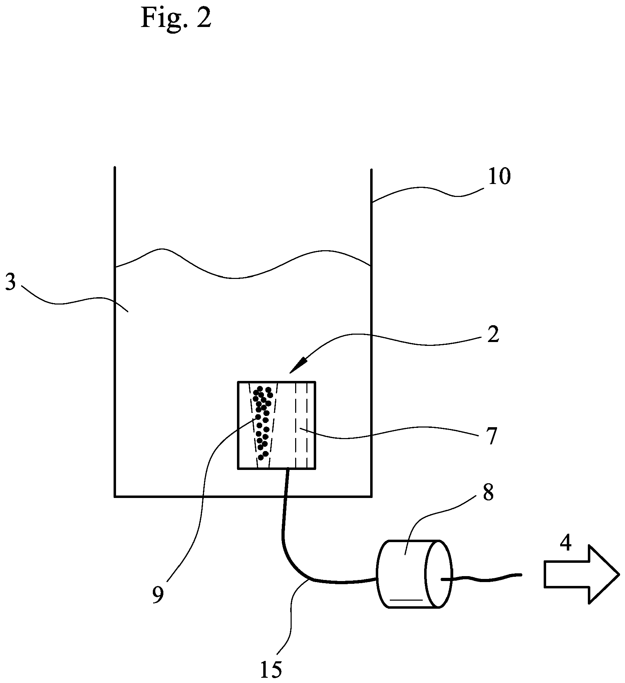

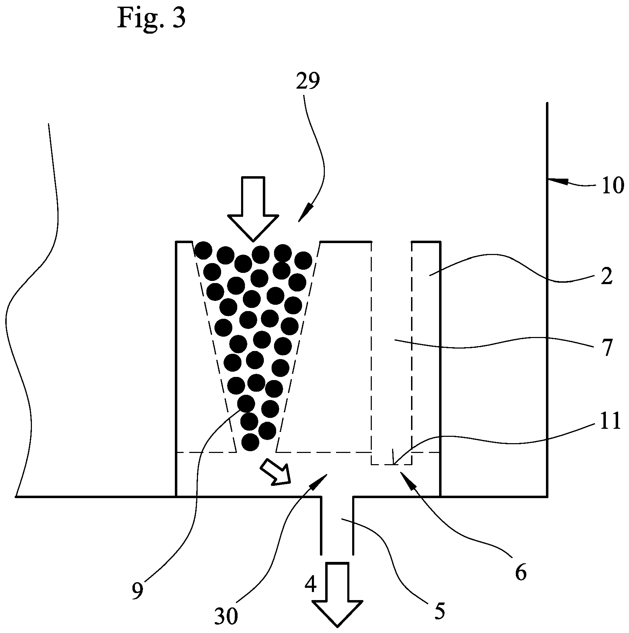

Die Figur 2 zeigt zur besseren Veranschaulichung einen Wassertank 10 mit einem integrierten Wasserfilter 2 als isolierte Baueinheit. In die von dem Wasserfilter 2 abgehende Saugleitung 15 ist eine Pumpe 8 integriert, die eine für die Förderung des Frischwassers 3 erforderliche Saugleistung erzeugt. Aus der Darstellung in Figur 2 geht ferner hervor, dass der Wasserfilter 2 einen Abschnitt mit Filtermaterial 9 aufweist und gleichzeitig über einen Bypass 7 verfügt, wobei der Aufbau des Wasserfilters 2 nachfolgend noch näher im Zusammenhang mit der Beschreibung der Figur 3 erläutert wird.

In der Figur 3 ist eine vergrößerte und stark vereinfachte Darstellung des Wasserfilters 3 innerhalb des Wassertanks 10 gezeigt. Der Wassertank 10 verfügt an seiner Ausgangsseite über einen Frischwassereinlauf 5, über den das Frischwasser 3 aus dem Tank 10 in das Strömungsleitungssystem überführt wird. Durch die Integration des Wasserfilters 2 in den Wassertank 10 befindet sich der Wasserfilter 2 permanent innerhalb des Frischwassers 3. Der Wasserfilter 2 verfügt über eine Filtereingangsseite 29 und eine Filterausgangsseite 30. Zur Filterung des Frischwassers 3 dient ein Filtermaterial 9, das vorliegend in einer speziellen Kammer angeordnet ist. Einen weiteren Teil des Wasserfilters 2 bildet ein kanalartig ausgeführter Bypass 7, der filterausgangsseitig durch ein Ventil 6 verschlossen ist. Bei dem in Figur 3 gezeigten Beispiel handelt es sich bei dem Ventil 6 um ein Membranventil mit einer Membran 11, deren Elastizität ein Öffnen und Schließen des Ventils 6 durch Druckunterschiede ermöglicht, die von der Pumpe 8 erzeugt werden. Die Figur 3 stellt die geschlossene Stellung des Ventils 6 und damit der Membran 11 dar.

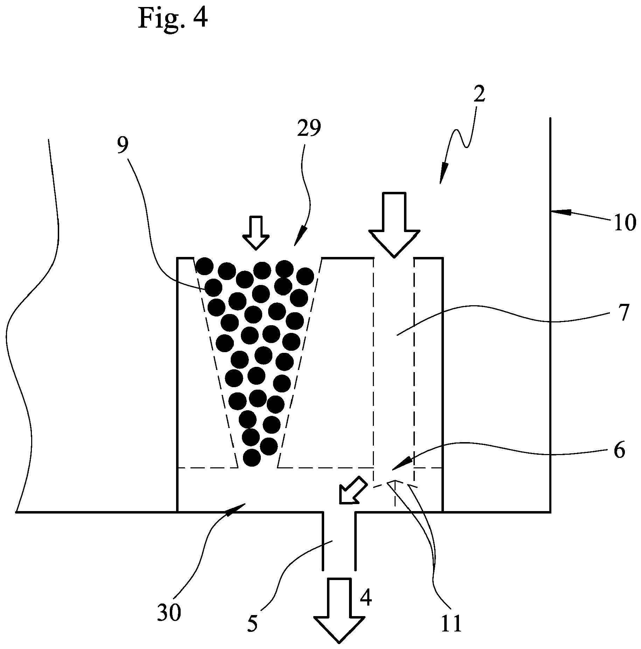

Im Unterschied hierzu ist in der Figur 4 durch Erhöhung des Pumpendrucks an dem Ventil 6 ein verstärkter Unterdruck erzeugt worden, der dazu führt, dass sich die Membran 11 öffnet und über den Bypass 7 des Wasserfilters 2 unmittelbar Frischwasser 3 aus dem Wassertank 10 in den Frischwassereinlauf 5 des Strömungsleitungssystems gelangt. Das Filtermaterial 9 wird bei diesem Beispiel zumindest überwiegend überbrückt, sodass nur ein geringer Teil des Frischwassers 3 durch das Filtermaterial 9 hindurch, ebenfalls zum Frischwassereinlauf 5 gelangen kann. Bei dieser Ausführung wird also eine Mischung von gefiltertem und ungefiltertem Wasser erzeugt, wobei das ungefilterte Wasser infolge des geringeren Strömungswiderstandes innerhalb des Bypasses 7 überwiegt.

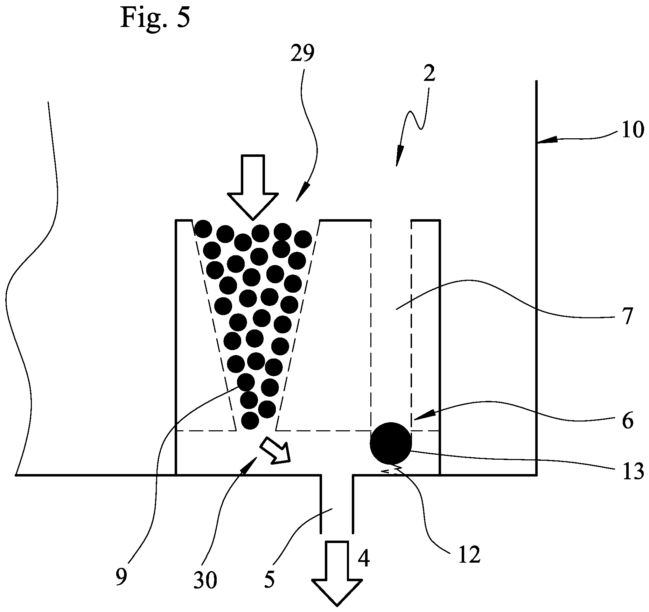

Ein anderes Beispiel für die Ausführung eines Ventils 6 zeigt die Darstellung in Figur 5. Hierbei wurde als Ventil 6 des Bypasses 7 eine Kugel 13 verwendet, die gegen die Kraft einer Feder 12 bewegt werden muss, um den Bypass 7 zu öffnen. Im Umkehrschluss bewirkt die Feder 12 eine Gegenkraft, sodass das Ventil 6 im Normalfall geschlossen ist und damit ausschließlich Frischwasser 3 durch das Filtermaterial 9 des Wasserfilters 2 hindurchfließt und gefiltert wird. Bei Erreichung eines definierten, von der Pumpe 8 erzeugten Druckes wird die Kugel 13 entgegen der Kraft der Feder 12 bewegt, sodass dadurch der Bypass 7 öffnet.

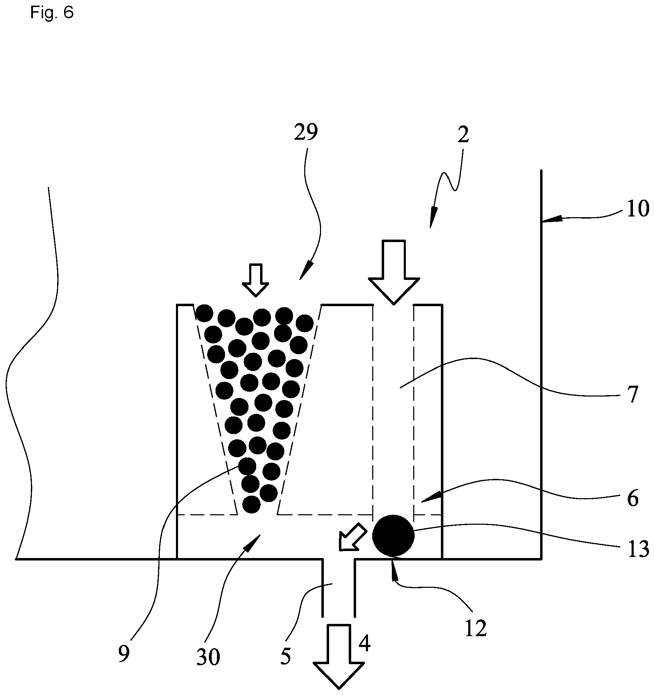

Die Figur 5 zeigt ein derartiges Kugelventil 6 in geschlossenem Zustand, während die Figur 6 ein Ventil 6 in geöffnetem Zustand darstellt, bei dem wiederum ein Verschnitt aus ungefiltertem und gefiltertem Frischwasser 3 erzeugt wird, weil bei dieser Ausführungsvariante noch ein geringer Teil des Frischwassers 3 durch das Filtermaterial 9 des Wasserfilters 2 hindurch fließen kann, obwohl das Ventil 6 geöffnet ist.

### BEZUGSZEICHENLISTE:

- 1: Getränkeautomat
- 2: Wasserfilter
- 3: Frischwasser
- 4: Flussrichtung
- 5: Frischwassereinlauf
- 6: Ventil
- 7: Bypass
- 8: Pumpe
- 9: Filtermaterial
- 10: Wassertank
- 11: Membran
- 12: Feder
- 13: Kugel
- 14: elektronische Steuerungsvorrichtung
- 15: Saugleitung
- 16: Heizeinrichtung
- 17: Brüheinheit
- 18: Steuerungsventil
- 19: Ausgabeeinheit
- 20: Auslaufdüsen
- 21: Abstellfläche
- 22: Ablauföffnungen
- 23: Dampfdüse
- 24: Eingabe- und Anzeigeeinrichtung
- 25: Wassertankdeckel
- 26: Bohnenbehälterdeckel
- 27: Oberseite
- 28: Frontseite
- 29: Filtereingangsseite
- 30: Filterausgangsseite

## Patentansprüche

1. Getränkeautomat (1) mit einem Wasserfilter (2) zur Filterung des in das Strömungsleitungssystem des Getränkeautomaten (1) abzugebenden Frischwassers (3), wobei der Wasserfilter (2), in Flussrichtung (4) betrachtet, vor dem Frischwassereinlauf (5) des Strömungsleitungssystems angeordnet ist,
wobei der Wasserfilter (2) einen durch ein Ventil (6) verschlossenen Bypass (7) aufweist, über den bei geöffnetem Ventil (6) ungefiltertes Frischwasser (3) in das Strömungsleitungssystem des Getränkeautomaten (1) zuführbar ist,
**dadurch gekennzeichnet,**
**dass** das Ventil (6) dazu ausgebildet ist, das Öffnen und Schließen des Ventils (6) mittels einer zur Erzeugung und Regulierung des Saugdruckes ausgeführten oder angesteuerten Pumpe (8) zu bewirken, wobei der Ansaugdruck der Pumpe (8) mittels einer hierfür ausgelegten Software einer elektronischen Steuerungsvorrichtung (14) in Abhängigkeit eines durchzuführenden Programmes des Getränkeautomaten (1) regelbar ist, sodass ab einem mit einem vordefinierten Sollwert identischen Istwert des Ansaugdruckes das den Bypass (7) verschließende Ventil (6) des Wasserfilters (2) geöffnet wird, um ungefiltertes Frischwasser (3) in das Strömungsleitungssystem des Getränkeautomaten (1) einzubringen.

2. Getränkeautomat nach Anspruch 1,
**dadurch gekennzeichnet, dass**
der Wasserfilter (2) in dem Wassertank (10) des Getränkeautomaten (1) angeordnet oder dem Wassertank (10) nachgeordnet ist.

3. Getränkeautomat nach einem der Ansprüche 1 bis 2,
**dadurch gekennzeichnet, dass**
das Ventil (6) ein Membranventil mit einer flexiblen Membran (11) ist.

4. Getränkeautomat nach einem der Ansprüche 1 bis 2,
**dadurch gekennzeichnet, dass**
das Ventil (6) durch eine den Bypass (7) mittels der Kraft einer Feder (12) verschließenden Kugel (13) gebildet ist.

5. Getränkeautomat nach einem der Ansprüche 1 bis 4,
**dadurch gekennzeichnet, dass**
das Ventil (6) ein Zweiwegeventil ist.

6. Getränkeautomat nach Anspruch 5,
**dadurch gekennzeichnet, dass** die elektronische Steuerungsvorrichtung (14) eine Software aufweist, die dazu ausgelegt und geeignet ist, verschiedene Programme des Getränkeautomaten (1) durchzuführen und in Abhängigkeit des jeweiligen Programmes eine Umschaltung des Zweiwegeventils (6) in eine hierfür erforderliche Stellung zu veranlassen.

7. Getränkeautomat nach einem der vorstehend genannten Ansprüche,
**dadurch gekennzeichnet, dass**
der Bypass (7) als ein Kanal ausgebildet ist.

8. Verfahren zur Ansteuerung des Ventils (6) eines Bypasses (7) eines Wasserfilters (2) in einem Getränkeautomaten (1) nach einem der vorstehend genannten Ansprüche, **dadurch gekennzeichnet, dass**
der Ansaugdruck einer in dem Strömungsleitungssystem des Getränkeautomaten (1) vorhandenen Pumpe (8) mittels einer hierfür ausgelegten Software einer elektronischen Steuerungsvorrichtung (14) in Abhängigkeit eines durchzuführenden Programmes des Getränkeautomaten (1) regelbar ist, sodass ab einem mit einem vordefinierten Sollwert identischen Istwert des Ansaugdruckes das den Bypass (7) verschließende Ventil (6) des Wasserfilters (2) geöffnet wird, um ungefiltertes Frischwasser (3) in das Strömungsleitungssystem des Getränkeautomaten (1) einzubringen.

9. Verfahren nach Anspruch 8,
**dadurch gekennzeichnet, dass**
der Ansaugdruck der Pumpe (8) über die Regelung der Drehzahl der Pumpe (8) variiert wird.

10. Verfahren nach Anspruch 8 oder 9,
**dadurch gekennzeichnet, dass**
das gefilterte Frischwasser (3) zur Zubereitung von Getränken und das ungefilterte Frischwasser (3) zur Durchführung von Spülungen, Reinigungsprogrammen und/oder Entkalkungs- beziehungsweise Entkeimungsprogrammen verwendet wird.

## Claims

1. Beverage dispenser (1) comprising a water filter (2) for filtering the fresh water (3) to be fed into the flow line system of the beverage dispenser (1), wherein the water filter (2), when viewed in the flow direction (4), is arranged upstream of the fresh water inlet (5) of the flow line system,
wherein the water filter (2) has a bypass (7) which is closed by a valve (6) and via which unfiltered fresh water (3) can be introduced into the flow line system of the beverage dispenser (1) when the valve (6) is open,
**characterised in that**
the valve (6) is designed to effect the opening and closing of the valve (6) by means of a pump (8) designed or controlled for generating and regulating the suction pressure, wherein the suction pressure of the pump (8) can be regulated by means of software, designed for this purpose, of an electronic control device (14) depending on a program of the beverage dispenser (1) that is to be run, so that, from an actual value of the suction pressure that is identical to a prespecified target value, the valve (6) of the water filter (2) closing the bypass (7) is opened in order to introduce unfiltered fresh water (3) into the flow line system of the beverage dispenser (1).

2. Beverage dispenser according to Claim 1,
**characterised in that**
the water filter (2) is arranged in the water tank (10) of the beverage dispenser (1) or is arranged downstream of the water tank (10).

3. Beverage dispenser according to either of Claims 1 to 2,
**characterised in that**
the valve (6) is a diaphragm valve with a flexible diaphragm (11).

4. Beverage dispenser according to either of Claims 1 to 2,
**characterised in that**
the valve (6) is formed by a ball (13) closing the bypass (7) by means of the force of a spring (12).

5. Beverage dispenser according to any one of Claims 1 to 4,
**characterised in that**
the valve (6) is a two-way valve.

6. Beverage dispenser according to Claim 5,
**characterised in that**
the electronic control device (14) has software which is designed and suitable for running different programs of the beverage dispenser (1) and, depending on the particular program, to initiate a switchover of the two-way valve (6) into a position required for this purpose.

7. Beverage dispenser according to any one of the preceding claims,
**characterised in that**
the bypass (7) is designed as a duct.

8. Method for controlling the valve (6) of a bypass (7) of a water filter (2) in a beverage dispenser (1) according to any one of the preceding claims,
**characterised in that**
the suction pressure of a pump (8) present in the flow line system of the beverage dispenser (1) can be regulated by means of software, designed for this purpose, of an electronic control device (14) depending on a program of the beverage dispenser (1) that is to be run, so that, from an actual value of the suction pressure that is identical to a prespecified target value, the valve (6) of the water filter (2) closing the bypass (7) is opened in order to introduce unfiltered fresh water (3) into the flow line system of the beverage dispenser (1).

9. Method according to Claim 8,
**characterised in that**
the suction pressure of the pump (8) is varied by regulating the speed of the pump (8).

10. Method according to Claim 8 or 9,
**characterised in that**
the filtered fresh water (3) is used for preparing beverages and the unfiltered fresh water (3) is used for carrying out flushing, cleaning programs, and/or descaling or disinfection programs.

## Revendications

1. Distributeur automatique de boissons (1) comportant un filtre à eau (2) pour le filtrage de l'eau fraîche (3) à envoyer dans le système de conduites d'écoulement du distributeur automatique de boissons (1), dans lequel le filtre à eau (2), vu dans le sens d'écoulement (4), est disposé avant l'entrée d'eau fraîche (5) du système de conduites d'écoulement,
dans lequel le filtre à eau (2) présente une dérivation (7) fermée par une soupape (6), par l'intermédiaire de laquelle dérivation, lorsque la soupape (6) est ouverte, de l'eau fraîche (3) non filtrée peut être amenée dans le système de conduites d'écoulement du distributeur automatique de boissons (1),
**caractérisé en ce que**
la soupape (6) est conçue pour provoquer l'ouverture et la fermeture de la soupape (6) au moyen d'une pompe (8) réalisée ou commandée pour la génération et la régulation de la pression d'aspiration, dans lequel la pression d'aspiration de la pompe (8) peut être régulée au moyen d'un logiciel configuré à cet effet d'un dispositif de commande électronique (14) en fonction d'un programme à exécuter du distributeur automatique de boissons (1), de sorte qu'à partir d'une valeur réelle de la pression d'aspiration identique à une valeur de consigne prédéfinie, la soupape (6) du filtre à eau (2) fermant la dérivation (7) est ouverte pour introduire de l'eau fraîche (3) non filtrée dans le système de conduites d'écoulement du distributeur automatique de boissons (1).

2. Distributeur automatique de boissons selon la revendication 1,
**caractérisé en ce que**
le filtre à eau (2) est disposé dans le réservoir d'eau (10) du distributeur automatique de boissons (1) ou en aval du réservoir d'eau (10).

3. Distributeur automatique de boissons selon l'une des revendications 1 à 2, **caractérisé en ce que**
la soupape (6) est une soupape à membrane comportant une membrane flexible (11).

4. Distributeur automatique de boissons selon l'une des revendications 1 à 2, **caractérisé en ce que**
la soupape (6) est formée par une bille (13) fermant la dérivation (7) au moyen de la force d'un ressort (12).

5. Distributeur automatique de boissons selon l'une des revendications 1 à 4, **caractérisé en ce que**
la soupape (6) est une soupape à deux voies.

6. Distributeur automatique de boissons selon la revendication 5,
**caractérisé en ce que**
le dispositif de commande électronique (14) présente un logiciel qui est configuré et adapté pour exécuter différents programmes du distributeur automatique de boissons (1) et pour permettre, en fonction du programme respectif, une commutation de la soupape (6) à deux voies dans une position nécessaire à cet effet.

7. Distributeur automatique de boissons selon l'une des revendications précédentes précitées,
**caractérisé en ce que**
la dérivation (7) est conçue sous la forme d'un canal.

8. Procédé permettant la commande de la soupape (6) d'une dérivation (7) d'un filtre à eau (2) dans un distributeur automatique de boissons (1) selon l'une des revendications précédentes précitées,
**caractérisé en ce que**
la pression d'aspiration d'une pompe (8) présente dans le système de conduites d'écoulement du distributeur automatique de boissons (1) peut être régulée au moyen d'un logiciel configuré à cet effet d'un dispositif de commande électronique (14) en fonction d'un programme à exécuter du distributeur automatique de boissons (1), de sorte qu'à partir d'une valeur réelle de la pression d'aspiration identique à une valeur de consigne prédéfinie, la soupape (6) du filtre à eau (2) fermant la dérivation (7) est ouverte pour introduire de l'eau fraîche (3) non filtrée dans le système de conduites d'écoulement du distributeur automatique de boissons (1).

9. Procédé selon la revendication 8,
**caractérisé en ce que**
la pression d'aspiration de la pompe (8) est modifiée par l'intermédiaire de la régulation de la vitesse de rotation de la pompe (8).

10. Procédé selon la revendication 8 ou 9,
**caractérisé en ce que**
l'eau fraîche (3) filtrée est utilisée pour la préparation de boissons et l'eau fraîche (3) non filtrée est utilisée pour l'exécution de rinçages, de programmes de nettoyage et/ou de programmes de détartrage ou de désinfection.
